# EUROPÄISCHE PATENTSCHRIFT

(11) **EP 2 033 827 B1**
(45) Veröffentlichungstag und Bekanntmachung des Hinweises auf die Patenterteilung: **10.10.2012**
(21) Anmeldenummer: 08013507.2
(22) Anmeldetag: 26.07.2008
(51) Int. Cl.: B60J 10/12

(54) **Ablegbare Dachanordnung für ein Kraftfahrzeug**
Collapsible roof fitting for a motor vehicle
Agencement de capote escamotable pour un véhicule automobile

(30) Priorität: 10.09.2007 DE 102007042831
(43) Veröffentlichungstag der Anmeldung: 11.03.2009
(73) Patentinhaber: Dr. Ing. h.c. F. Porsche AG, 70435 Stuttgart (DE)
(72) Erfinder: Beierl, Dominik, 70825 Korntal-Münchingen (DE); Hermann, Felix, 71229 Leonberg (DE); Neidlein, Harald, 70197 Stuttgart (DE); Bronda, Angelo, 71287 Weissach (DE)

(56) Entgegenhaltungen:
- EP-A- 1 247 672
- DE-A1- 4 039 444
- DE-A1- 10 320 538
- DE-A1-102005 027 511

## Beschreibung

Bei der Erfindung wird ausgegangen von einer ablegbaren Dachanordnung für ein Kraftfahrzeug, gemäß Oberbegriff des Patentanspruchs 1,

Eine gattungsbildende ablegbare Dachanordnung für ein Kraftfahrzeug ist aus der DE 10 2005 027 511 A1 bekannt. Sie umfasst zumindest zwei relativ zueinander bewegbare und ablegbare Dachteile, die seitlich Formgebungsabschnitte für einen jeweils seitlich angebrachten Verdeckbezugstreifen bilden und die in Schließstellung der Dachanordnung in Reihe aneinander liegen bzw. aneinander angrenzen. Zwischen den Verdeckbezugstreifen weisen die Dachteile Glaseinsätze auf. Etwa parallel zu jedem Verdeckbezugstreifen und in Fahrzeuglängsrichtung verlaufen benachbart zu den Verdeckbezugstreifen Wasserrinnen, die in Rahmen der Dachteile ausgebildet sind. Durch biegsame Stangen oder Seile, die in Taschen am Verdeckbezugstreifen verlaufen, sollen die Verdeckbezugstreifen zumindest im Bereich einer Stofflose auf die Formgebungsabschnitte gezogen werden. Dabei kommt ein innerer Rand des Verdeckbezugstreifens in der Wasserrinne zu liegen. Die Verdeckbezugsstreifen können abschnittweise auch mit den Formgebungsabschnitten verbunden sein.

Aus der DE 40 39 444 A1 ist eine ablegbare Dachanordnung in Form eines Faltverdecks bekannt. Das Faltverdeck weist eine Hecköffnung auf, die in Schließstellung des Faltverdecks von einer Heckscheibe verschlossen ist. Begrenzt wird die Hecköfifnung von einem Verdeckbezugstreifen, der einen inneren Rand aufweist, der zumindest in Schließstellung des Faltverdecks zusammen mit einer an der Unterseite des inneren Randes angebrachten Dichtungsanordnung eine dichte Abdeckung für einen darunter liegenden Wasser-Sammelraum bildet.

Aufgabe der Erfindung ist es, eine ablegbare Dachanordnung der eingangs genannten Art zu schaffen, die ein optimiertes Wassermanagement aufweist.

Gelöst wird diese Aufgabe mit einer Dachanordnung, die die in Patentanspruch 1 genannten Merkmale aufweist. Ausführungsbeispiele und Weiterbildungen der Erfindung sind Gegenstand der Unteransprüche.

Die mit der Erfindung hauptsächlich erzielten Vorteile sind darin zu sehen, dass die in die Wasserrinne eintretende Wassermenge deutlich reduziert wird, im günstigsten Fall ein Wassereintritt in die Rinne sogar vermieden werden kann. Dies ist schon deshalb vorteilhaft, weil zwischen zwei Formgebungsabschnitten die Wasserrinne unterbrochen sein kann. Die aus den Wasserrinnen abzuleitende Wassermenge ist daher relativ gering und es kommt zu keinem Wasserstau. Die Dichtungsanordnung findet ein Widerlager durch die Verstärkung und der Rand des Verdeckbezugstreifens erhält einen optisch hochwertigen Abschluss, der von einer Kederleiste gebildet ist.

Eine vorteilhafte dichte Abdeckung kann insbesondere erreicht werden, wenn sich der Rand des Verdeckbezugstreifens über die Wasserrinne hinweg erstreckt (Anspruch 2) und beispielsweise auf einem Mittenabschnitt zu liegen kommt, der sich zwischen den beiden seitlichen Verdeckbezugstreifen erstreckt. Dieser Mittenabschnitt kann nach Anspruch 13 durchsichtig oder farbig lackiert, insbesondere in der Farbe der Fahrzeugkarosserie, oder strukturiert ausgeführt sein.

Eine verbesserte Dichtungsanordnung ist Gegenstand des Anspruchs 3.

Durch ein entsprechend Anspruch 6 vorgesehenes Spannseil kann ein Anpressdruck auf die Dichtungsanordnung aufgebaut werden. Zusätzlich verbessert ein Spannseil die Positionierung der Dichtungsanordnung auf dem Formgebungsabschnitt.

In den Ansprüchen 7 und 8 sind zwei alternative Ausführungsspiele für die Lage der Dichtungsanordnung angegeben, wenn die Dachanordnung in Schließstellung ist.

Besonders bevorzugt wird ein Ausführungsbeispiel nach Anspruch 9, wonach eine zweite Dichtungsanordnung ein Eindringen von Wasser in den Fahrzeuginnenraum verhindert und das Wasser in der Wasserrinne zurückhält.

Vorteilhafte Weiterbildungen für die Ausgestaltung der Wasserrinne bzw. des Rahmens sind in den Ansprüchen 10, 11 und 12 angegeben.

Ein weiter bevorzugtes Ausführungsbeispiel nach Anspruch 14 weist den Vorteil auf, dass an einem Übergang zwischen zwei Abschnitten von Wasserrinnen an zwei hintereinander angeordneten Formgebungsabschnitten Wasser aufgefangen werden kann. Die Wasserauffiangeinrichtung kann jedoch auch durchgehend vorgesehen sein. Bevorzugt wird die Wasserauffangeinrichtung, die als Schale oder Rinne ausgeführt sein kann, an einem Rahmen oder dem Formgebungsabschnitt befestigt, wie in Anspruch 14 angegeben.

Die Erfindung wird nachfolgend anhand von Ausführungsbeispielen mit Bezug auf die Zeichnung näher erläutert. Es zeigen:
- Fig. 1: eine Perspektive einer ablegbaren Dachanordnung,
- Fig. 2: einen in Fahrzeuglängsrichtung verlaufenden Schnitt entlang der Linie II - II in Fig. 1,
- Fig. 3: einen in Fahrzeugquerrichtung verlaufenden Schnitt entlang der Linie 111 - 111 in Fig. 1 durch einen Verdeckbezugstreifen mit einer Dichtungsanordnung und
- Fig. 4 bis 7: jeweils weitere Ausführungsbeispiele von Verdeckbezugstreifen und Dichtungsanordnungen in Schnittdarsteliungen.

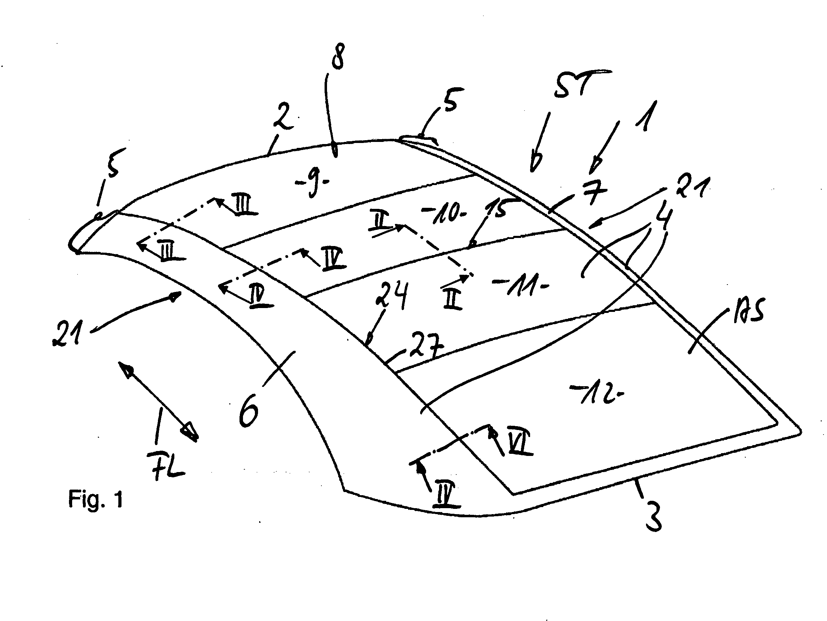

In Fig. 1 ist in einer perspektivischen Ansicht von hinten eine ablegbare Dachanordnung 1 für ein nicht gezeigtes Kraftfahrzeug, insbesondere Cabriolet, zu sehen, die ein vorderes Ende 2 und ein hinteres Ende 3 aufweist. Das vordere Ende 2 wirkt mit einem hier nicht gezeigten Windschutzscheibenrahmenteil des Kraftfahrzeugs zusammen, wenn die Dachanordnung 1 in ihrer gezeigten Schließstellung ST ist und einen Fahrzeuginnenraum bzw. Fahrgastraum FG überspannt. Das hintere Ende 3 endet in einem Heckbereich des Kraftfahrzeugs, In diesem Heckbereich ist ferner ein Ablagekasten (nicht gezeigt) vorgesehen, der in einer Ablagestellung die zusammengeklappte Dachanordnung 1 aufnimmt. Der Ablagekasten kann mit einem feststehenden oder bewegbaren Kastendeckel versehen sein.

Die Dachanordnung 1 weist vom Ende 2 bis zum Ende 3 eine Dachhaut 4 auf, die sich wie folgt zusammensetzt: jeweils seitlich in einem Randstreifenabschnitt 5 der Dachhaut 4 befindet sich ein seitlicher Verdeckbezugstreifen 6 und 7 aus einem flexiblen, wasserundurchlässigen Material, wie es für Verdeckstoffe so genannter Softtops bekannt ist. Dazwischen liegt ein Mittenabschnitt 8, der vorzugsweise aus einem steifen Material durchsichtig und/oder farbig lackiert und/oder strukturiert hergestellt ist. Unterhalb der Dachhaut 4 liegen zumindest zwei, hier vier Dachsegmente 9, 10, 11 und 12, die in der Schließstellung ST in Reihe aneinander liegen und in der Ablagestellung in bevorzugter Reihenfolge 9, 10, 11 und 12 (von oben nach unten gesehen) in den Ablagekasten verlagert sind.

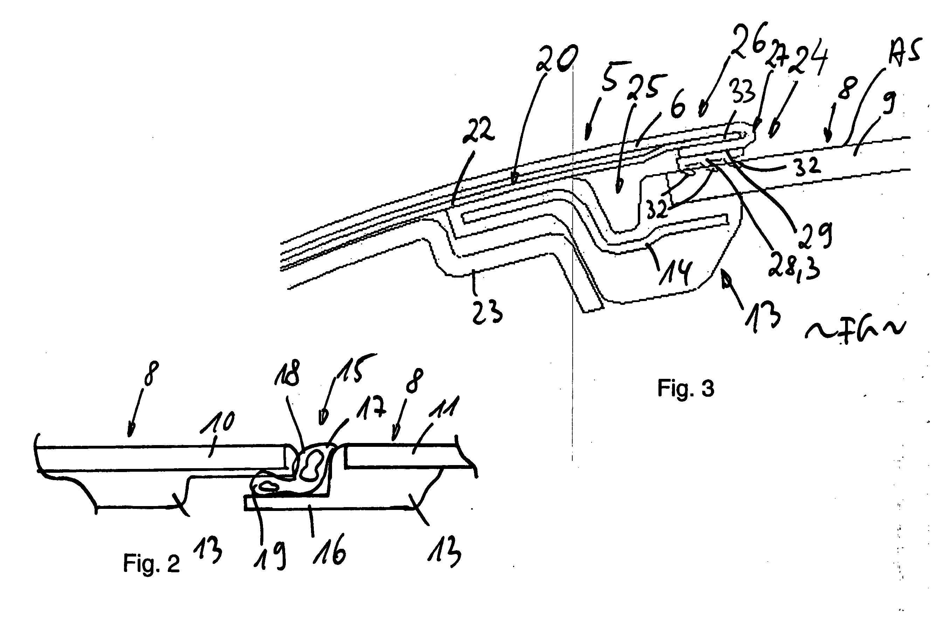

Zumindest eines, vorzugsweise alle oder zumindest zwei oder drei der Dachsegmente 9, 10 und 11 sind wie folgt aufgebaut. Sie weisen, wie beispielsweise Fig. 2 und 3 zeigen, den Mittenabschnitt 8 beispielsweise als Glaseinsatz auf, der auf einem darunter liegenden Rahmen 13 befestigt ist. Der Rahmen 13 kann umlaufend als Umschäumung des Mittenabschnitts 8 ausgebildet sein und eine Verstärkungseinlage 14, beispielsweise aus Blech, aufweisen. In einem Querdichtungsspalt 15 zwischen zwei aneinander grenzenden Dachsegmenten 10 und 11 (Fig. 3) dient der Rahmen 13 mit einem Fortsatz 16 als Dichtungsträger für eine Dichtung 17 mit zwei Dichtungssträngen 18 und 19 in dem Querdichtungsspalt 15. Dabei erstreckt sich der Fortsatz 16 bis unter das benachbarte Dachsegment 10. Außerdem bildet jeder Rahmen 15 unter dem Randstreifenabschnitt 5 zumindest abschnittweise einen parallel zu dem zugeordneten Verdeckbezugstreifen 6, 7 liegenden Formgebungsabschnitt 20 für den Verdeckbezugstreifen 6 bzw. 7, auf dem der jeweilige Verdeckbezugstreifen 6 bzw. 7, ggf. unter Zwischenanordnung einer Dämm- bzw. Isolierschicht, aufliegt. Die in Reihe aneinander liegenden, in Streifen etwa in Fahrzeuglängsrichtung FL verlaufenden Formgebungsabschnitte 20 der Dachsegmente 9, 10, 11 und 12 konturieren so einen seitlichen Dachrahmen 21, in den hier nicht dargestellte Seitenfenster der Cabriolets einfahren können. Die Formgebungsabschnitte 20 können durch steife Materialstreifen 22, unterstützt bzw. in ihrer Fläche vergrößert werden. Die Formgebungsabschnitte können ferner gebildet sein durch seitliche Träger 23, an denen einerseits eine hier nicht gezeigte Verdeckkinematik zum Bewegen der Dachanordnung 1 und andererseits der Rahmen 13 gehalten sein können. Der Materialstreifen 22 kann sich über den Träger 23 und den Rahmen 13 erstrecken. Die Dichtung 17 kann sich bis in den Bereich der Rahmen 13 und/oder der Formgebungsabschnitte 20 erstrecken.

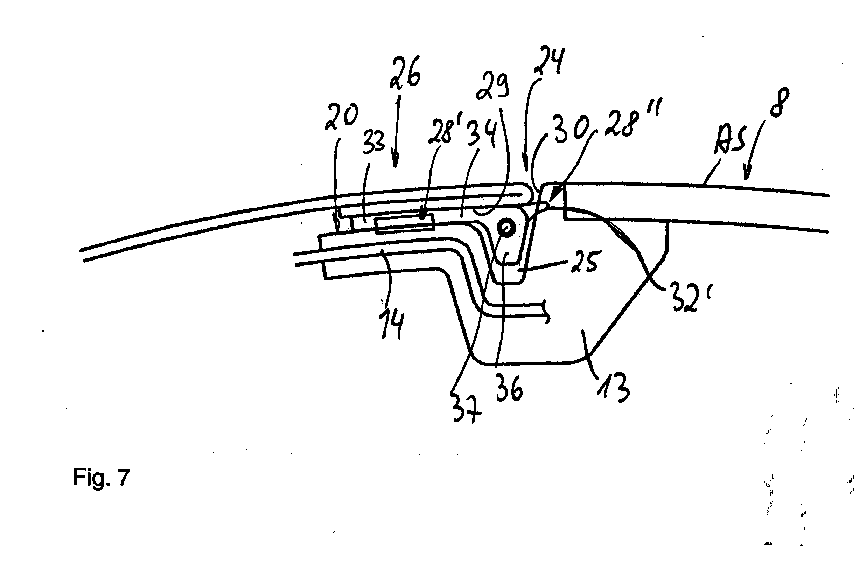

Wie aus Fig. 3 noch zu sehen ist, liegt unter einem in Fahrzeuglängsrichtung FL (Fig. 1) verlaufenden Längsdichtungsspalt 24 eine im Querschnitt nach oben offene Wasserrinne 25, vorzugsweise an einem, zwei, drei oder an jedem Dachsegment 9, 10, 11 und 12, die von dem Rahmen 13 bzw. dessen Formgebungsabschnitt 20, vorzugsweise einstückig, ausgeht. Die nach oben offene Wasserrinne 25 wird mit einer Abdeckung 26 dicht abgedeckt. Dieses Abdeckung 26 wird gebildet von einem inneren, d.h. benachbart innen zu dem Mittenabschnitt 8 und nicht außen am Dachrahmen 21 liegenden Rand 27 des Verdeckzugstreifens 6 bzw. 7, und von einer Dichtungsanordnung 28, die von einer Unterseite 29 des Verdeckbezugstreifens 6 bzw. 7 ausgeht. Die Dichtungsanordnung 28 liegt entweder auf der Außenseite AS des Mittenabschnitts 8 auf (Fig. 3 bis 6) oder liegt an einer Seitenwandung 30 (Fig. 7) der Wasserrinne 25 an.

Im Folgenden wird hauptsächlich auf Unterschiede zwischen den einzelnen Figuren eingegangen. Gleiche bzw. gleich wirkende Teile sind jedoch durchgängig mit denselben Bezugszeichen versehen.

Erstes Ausführungsbeispiel nach Fig. 3: Der Materialstreifen 22 ist bis über die Wasserrinne 25 gezogen und der Rand 27 des Verdeckbezugstreifens 6 ist um den Materialstreifen 22 endseitig herumgeschlagen. Die als in Fahrzeuglängsrichtung FL verlaufender Dichtungsstreifen 31 ausgebildete Dichtungsanordnung 28 besitzt eine oder mehrere Dichtungslippen 32, die parallel und mit seitlichem Abstand zueinander verlaufen können und in Schließstellung ST auf dem Mittenabschnitt 8 aufliegen. Dieses Ausführungsbeispiel wird bevorzugt in den Bereichen, beispielsweise abschnittweise für das Dachsegment 9, verwendet, in denen der Verdeckbezugstreifen 6 bzw. 7 für die Ablagestellung der Dachanordnung 1 nicht von den Formgebungsabschnitten 20 abgehoben wird. D. h. der Materialstreifen 22 kann fest mit dem Träger 23 bzw. dem Rahmen 13 verbunden sein. Die Dichtungsanordnung 28 ist an dem umgeschlagenen Abschnitt des Randes 27 am Verdeckbezugstreifen 6 bzw. 7 befestigt. In anderen Abschnitten des Verdeckbezugstreifens 6 bzw. 7 kann Stofflose vorliegen, um die Dachanordnung 1 ablegen zu können.

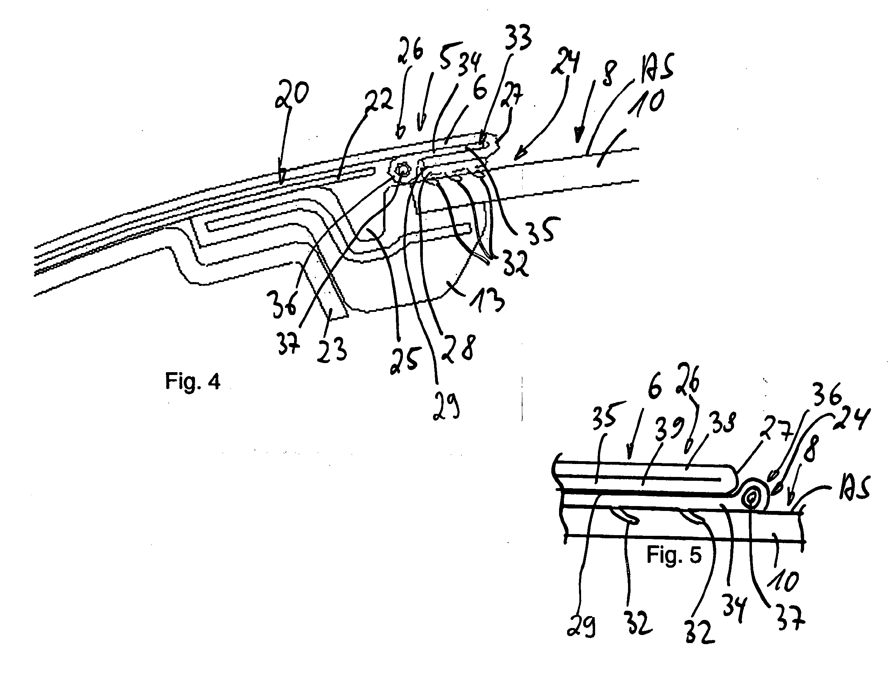

Zweites Ausführungsbeispiel nach Fig. 4: Der Materialstreifen 22 ist verkürzt und endet über der Wasserrinne 25. Der Rand 27 ist um eine separate, streifenartige Verstärkung 33 herum umgeschlagen, die als Kederleiste 34 ausgeführt ist. Die Kederleiste 34 weist einen Streifenabschnitt 35 auf, um den der Rand 27 gelegt ist. Innen freiliegend weist die Kederleiste 34 noch einen wulstartigen Aufnahmeabschnitt 36 für ein in Fahrzeuglängsrichtung FL verlaufendes Spannseil 37 auf. Die Dichtungsanordnung 28 liegt - wie beim Ausführungsbeispiel nach Fig. 3 - an dem umgeschlagenen Abschnitt des Randes 27, welcher Abschnitt somit die Unterseite 29 bildet.

Drittes Ausführungsbeispiel nach Fig. 5: Die Kederleiste 34 ist hier nicht zwischen den umgeschlagenen Lagen 38 und 39 des Randes 27 aufgenommen, sondern an der Unterseite 29 des umgeschlagenen Abschnitts des Randes 27 befestigt. Die wulstartige Aufnahme 36 für das Spannseil 37 liegt ebenfalls frei, jedoch außen im Dichtungsspalt 24.

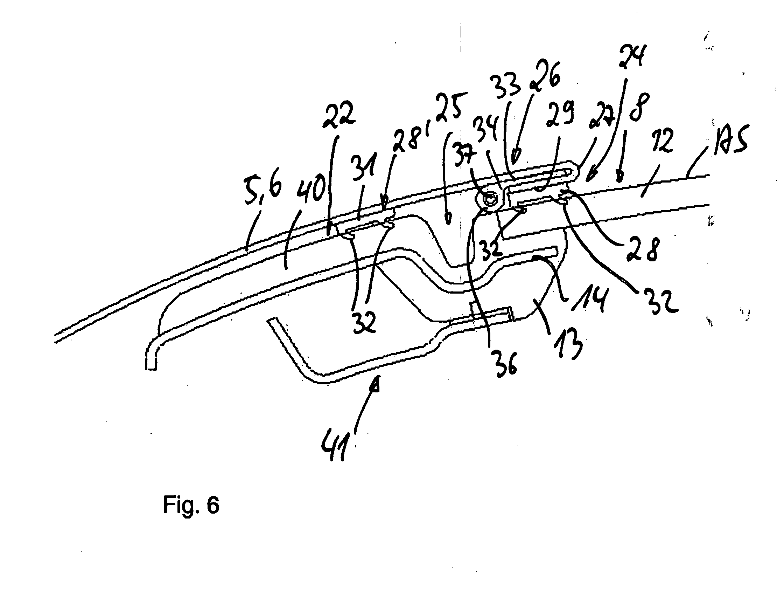

Viertes Ausführungsbeispiel nach Fig. 6: Die Abdeckung 26 für die Wasserrinne 25 ist im Wesentlichen identisch mit der Abdeckung 26 in Fig. 4 ausgeführt. Der Rahmen 13 übernimmt hier jedoch mit einer seitlichen Erweiterung 40 die Aufgabe des Materialstreifens 22, wobei sich seitliche Erweiterungen 40 jeweils parallel zu dem Mittenabschnitt 8 des Dachsegmentes 12 erstrecken, das ein Heckdachelement mit Heckscheibe bilden kann. Die Verstärkungseinlage 14 erstreckt sich bis in die Erweiterungen 40. Die Abdeckung 26 für die Wasserrinne 25 weist hier beidseitig eine Dichtungsanordnung 28, 28' auf, die sich entlang der Wasserrinne 25 erstrecken. Grundsätzlich wäre es denkbar, beide Dichtungsanordnungen 28, 28' identisch auszuführen, wie es für den Dichtungsstreifen 31 mit den zwei Dichtungslippen 32 gezeigt ist. Die Dichtungsanordnungen 28, 28' können jedoch eine unterschiedliche Anzahl von Dichtungslippen 32 aufweisen. Denkbar wäre es überdies, der Dichtungsanordnung 28' eine Dichtungsanordnung 28" zuzuordnen, wie sie in Fig. 7 gezeigt ist. Außerdem ist an dem Rahmen 13 noch eine Wasserauffangeinrichtung 41 angebracht, die als nach oben offene Schale oder Rinne ausgeführt sein kann. Sie kann sich insbesondere unterhalb von Querdichtungsspalten 15 abschnittweise oder durchgehend unterhalb der Wasserrinne 25 entlang des Dachrahmens 21 in Fahrzeuglängsrichtung FL erstrecken. Die Wasserauffangeinrichtung 41 ist vorzugsweise als separates, flexibles Bauteil ausgeführt und an dem Rahmen 13 befestigt.

Fünftes Ausführungsbeispiel nach Fig. 7: Der Verdeckbezugstreifen 6 bzw. 7 fluchtet hier etwa mit der Außenseite AS, so dass eine ebene Dachaußenhaut 4 gebildet wird. D. h. der Rand 27 reicht bis zu der äußeren Seitenwandung 30, die in die Außenseite AS übergeht, und an der Unterseite 29 trägt der Rand 27 eine Kederleiste 34' mit der Aufnahme 36 für das Spannseil 37, wobei die keilförmige Aufnahme 36 innerhalb der Wasserrinne 25 liegt und der Streifenabschnitt 35 der Kederleiste 34' zwischen der Unterseite 29 und dem Formgebungsabschnitt 20 platziert ist. Von der Aufnahme 36 geht eine Dichtungslippe 32' aus, die sich dichtend an die Seitenwand 30 anlegt. Die Wasserrinne 25 ist jedoch weitgehend abgeschirmt. Zwischen dem Streifenabschnitt 35 und dem Formgebungsabschnitt 20 kann noch eine zweite Dichtungsanordnung 28' vorgesehen sein, wie sie für das Ausführungsbeispiel nach Fig. 6 beschrieben ist.

## Patentansprüche

1. Ablegbare Dachanordnung (1) für ein Kraftfahrzeug, mit zumindest zwei relativ zueinander bewegbaren und zusammen ablegbaren Formgebungsabschnitten (20) für seitliche Verdeckbezugstreifen (6, 7), welche Formgebungsabschnitte (20) in einer Schließstellung (ST) der Dachanordnung (1) in Reihe aneinander liegen und etwa parallel zu jedem Verdeckbezugstreifen (6, 7) und in Fahrzeuglängsrichtung (FL) verlaufende sowie benachbart zu den Verdeckbezugstreifen (6, 7) Wasserrinnen (25) aufweisen, **dadurch gekennzeichnet, dass** ein innerer Rand (27) jedes Verdeckbezugstreifens (6, 7) zumindest in einer Schließstellung (ST) der Dachanordnung (1) zusammen mit zumindest einer Dichtungsanordnung (28, 28") eine dichte Abdeckung (26) für die benachbarte Wasserrinne (25) bildet und dass der Rand (27) der Verdeckbezugstreifens (6, 7) verstärkt ausgeführt ist, wobei für die Verstärkung (33) des Randes (27) des Verdeckbezugstreifens (6, 7) eine Kederleiste (34) vorgesehen ist.

2. Dachanordnung nach Anspruch 1, **dadurch gekennzeichnet, dass** der Verdeckbezugstreifen (6, 7) über die Wasserrinne (25) hinweg reicht und an seiner Unterseite (29) die Dichtungsanordnung (28) aufweist.

3. Dachanordnung nach einem der vorhergehenden Ansprüche, **dadurch gekennzeichnet, dass** die Dichtungsanordnung (28, 28') mehrere parallel zueinander laufende Dichtlippen (32) aufweist.

4. Dachanordnung nach Anspruch 1, **dadurch gekennzeichnet, dass** der Rand (27) des Verdeckbezugstreifens (6, 7) zweilagig (Lagen 38, 39) ausgeführt ist.

5. Dachanordnung nach Anspruch 1, **dadurch gekennzeichnet, dass** in dem Rand (27) des Verdeckbezugstreifens (6, 7) zwischen zwei Lagen (38, 39) die Kederleiste (34) liegt und die Dichtungsanordnung (28, 28') an der Unterseite (29) auf dem Verdeckbezug aufgebracht ist.

6. Dachanordnung nach einem der Ansprüche 1, 4 oder 5, **dadurch gekennzeichnet, dass** in der Kederleiste (34) ein Spannseil (37) aufgenommen ist.

7. Dachanordnung nach einem der vorhergehenden Ansprüche, **dadurch gekennzeichnet, dass** die Dichtungsanordnung (28) auf einer Außenseite des Formgebungsabschnitts (20) aufliegt, wenn die Dachanordnung (1) in Schließstellung (ST) ist

8. Dachanordnung nach einem der vorhergehenden Ansprüche, **dadurch gekennzeichnet, dass** die Dichtungsanordnung (28") mit einer Wandung (30) der Wasserrinne (25) zusammenwirkt.

9. Dachanordnung nach einem der vorhergehenden Ansprüche, **dadurch gekennzeichnet, dass** sich entlang jeder Wasserrinne (25) beidseitig eine Dichtungsanordnung (28, 28', 28") erstreckt.

10. Dachanordnung-nach-einem der vorhergehenden Ansprüche, **dadurch gekennzeichnet, dass** die Wasserrinne (25) an einem Rahmen (13) des Formgebungsabschnitts (20) ausgebildet ist.

11. Dachanordnung nach einem der vorhergehenden Ansprüche, **dadurch gekennzeichnet, dass** die Wasserrinne (25) an einem Rahmen (13) des Formgebungsabschnitts (20) ausgebildet ist und dass der Rahmen (13) eine Verstärkungseinlage (14) aufweist.

12. Dachanordnung nach einem der vorhergehenden Ansprüche, **dadurch gekennzeichnet, dass** die Wasserrinne (25) an einem Rahmen (13) des Formgebungsabschnitts (20) ausgebildet ist und dass der Rahmen (13) durch eine Umschäumung gebildet ist.

13. Dachanordnung nach einem dervorhergehenden Ansprüche, **dadurch gekennzeichnet_{;} dass** auf den Rahmen (13) ein durchsichtiger oder farbig lackierter oder strukturierter Mittenabschnitt (8) aufgesetzt ist.

14. Dachanordnung nach einem der vorhergehenden Ansprüche, **dadurch gekennzeichnet, dass** an einer einem Fahrzeuginnenraum (FG) zugewandten Innenseite des Formgebungsabschnitts (20) oder des Rahmens (13) zumindest abschnittweise eine Wasserauffangeinrichtung (41) angeordnet ist.

15. Dachanordnung nach einem der vorhergehenden Ansprüche, **dadurch gekennzeichnet, dass** zwischen den beiden Formgebungsabschnitten (20) eine Dichtung (17) angeordnet ist.

## Claims

1. Motor vehicle roof arrangement (1) which can be put away, with at least two shaping sections (20), which are movable relative to one another and can be put away together, for lateral convertible top cloth strips (6, 7), which shaping sections (20) lie in a row next to one another in a closed position (ST) of the roof arrangement (1) and have water channels (25) which run approximately parallel to each convertible top cloth strip (6, 7) and in the longitudinal direction of the vehicle (FL) and also adjacent to the convertible top cloth strips (6, 7), **characterized in that**, at least in a closed position (ST) of the roof arrangement (1), an inner edge (27) of each convertible top cloth strip (6, 7) together with at least one sealing arrangement (28, 28") forms a leakproof covering (26) for the adjacent water channel (25) and **in that** the edge (27) of the convertible top cloth strips (6, 7) is of reinforced design, a weatherstrip (34) being provided for the reinforcement (33) of the edge (27) of the convertible top cloth strip (6, 7).

2. Roof arrangement according to Claim 1, **characterized in that** the convertible top cloth strip (6, 7) reaches beyond the water channel (25) and has the sealing arrangement (28) on its lower side (29).

3. Roof arrangement according to one of the preceding claims, **characterized in that** the sealing arrangement (28, 28') has a plurality of sealing lips (32) running parallel to one another.

4. Roof arrangement according to Claim 1, **characterized in that** the edge (27) of the convertible top cloth strips (6, 7) is of two-layered design (layers 38, 39).

5. Roof arrangement according to Claim 1, **characterized in that** the weatherstrip (34) lies between two layers (38, 39) in the edge (27) of the convertible top cloth strip (6, 7), and the sealing arrangement (28, 28') is attached to the lower side (29) of the convertible top cloth.

6. Roof arrangement according to one of Claims 1, 4 or 5, **characterized in that** a tensioning cable (37) is accommodated in the weatherstrip (34).

7. Roof arrangement according to one of the preceding claims, **characterized in that** the sealing arrangement (28) rests on an outer side of the shaping section (20) when the roof arrangement (1) is in the closed position (ST).

8. Roof arrangement according to one of the preceding claims, **characterized in that** the sealing arrangement (28") interacts with a wall (30) of the water channel (25).

9. Roof arrangement according to one of the preceding claims, **characterized in that** a sealing arrangement (28, 28', 28") extends along each water channel (25) on both sides.

10. Roof arrangement according to one of the preceding claims, **characterized in that** the water channel (25) is formed on a frame (13) of the shaping section (20).

11. Roof arrangement according to one of the preceding claims, **characterized in that** the water channel (25) is formed on a frame (13) of the shaping section (20), and **in that** the frame (13) has a reinforcing insert (14).

12. Roof arrangement according to one of the preceding claims, **characterized in that** the water channel (25) is formed on a frame (13) of the shaping section (20), and **in that** the frame (13) is formed by a foam-encapsulated structure.

13. Roof arrangement according to one of the preceding claims, **characterized in that** a central section (8) which is transparent or is painted in color or is textured is placed onto the frame (13).

14. Roof arrangement according to one of the preceding claims, **characterized in that** a water-trapping device (41) is arranged at least in sections on an inner side of the shaping section (20) or of the frame (13), which inner side faces a vehicle interior (FG).

15. Roof arrangement according to one of the preceding claims, **characterized in that** a seal (17) is arranged between the two shaping sections (20).

## Revendications

1. Agencement de capote escamotable (1) pour un véhicule automobile, avec au moins deux parties de formage (20) mobiles l'une par rapport à l'autre et escamotables ensemble pour des bandes latérales de garniture de capote (6, 7), parties de formage (20) qui s'appliquent l'une à l'autre en série dans la position de fermeture (ST) de l'agencement de capote (1) et qui présentent des gouttières (25) s'étendant sensiblement parallèlement à chaque bande de garniture de capote (6, 7) et dans la direction longitudinale du véhicule (FL) ainsi qu'à proximité des bandes de garniture de capote (6, 7), **caractérisé en ce qu'**un bord intérieur (27) de chaque bande de garniture de capote (6, 7) forme, au moins dans une position de fermeture (ST) de l'agencement de capote (1), avec au moins un agencement d'étanchéité (28, 28"), un recouvrement étanche (26) pour la gouttière voisine (25) et **en ce que** le bord (27) de la bande de garniture de capote (6, 7) est réalisé de façon renforcée, dans lequel il est prévu une ailette (34) pour le renforcement (33) du bord (27) de la bande de garniture de capote (6,7).

2. Agencement de capote selon la revendication 1, **caractérisé en ce que** la bande de garniture de capote (6, 7) s'étend par-dessus la gouttière (25) et présente l'agencement d'étanchéité (28) sur sa face inférieure (29).

3. Agencement de capote selon l'une quelconque des revendications précédentes, **caractérisé en ce que** l'agencement d'étanchéité (28, 28') présente plusieurs lèvres d'étanchéité (32) s'étendant parallèlement l'une à l'autre.

4. Agencement de capote selon la revendication 1, **caractérisé en ce que** le bord (27) de la bande de garniture de capote (6, 7) est réalisé en deux couches (couches 38, 39).

5. Agencement de capote selon la revendication 1, **caractérisé en ce que** l'ailette (34) est située entre deux couches (38, 39) dans le bord (27) de la bande de garniture de capote (6, 7) et l'agencement d'étanchéité (28, 28') est placé sur la face inférieure (29) sur la garniture de capote.

6. Agencement de capote selon l'une quelconque des revendications 1, 4 ou 5, **caractérisé en ce qu'**un câble de serrage (37) est logé dans l'ailette (34).

7. Agencement de capote selon l'une quelconque des revendications précédentes, **caractérisé en ce que** l'agencement d'étanchéité (28) repose sur une face extérieure de la partie de formage (20), lorsque l'agencement de capote (1) se trouve en position de fermeture (ST).

8. Agencement de capote selon l'une quelconque des revendications précédentes, **caractérisé en ce que** l'agencement d'étanchéité (28") coopère avec une paroi (30) de la gouttière (25).

9. Agencement de capote selon l'une quelconque des revendications précédentes, **caractérisé en ce qu'**un agencement d'étanchéité (28, 28', 28") s'étend de part et d'autre le long de chaque gouttière (25).

10. Agencement de capote selon l'une quelconque des revendications précédentes, **caractérisé en ce que** la gouttière (25) est formée sur un cadre (13) de la partie de formage (20).

11. Agencement de capote selon l'une quelconque des revendications précédentes, **caractérisé en ce que** la gouttière (25) est formée sur un cadre (13) de la partie de formage (20) et **en ce que** le cadre (13) présente une armature de renforcement (14).

12. Agencement de capote selon l'une quelconque des revendications précédentes, **caractérisé en ce que** la gouttière (25) est formée sur un cadre (13) de la partie de formage (20) et **en ce que** le cadre (13) est formé par un enrobage de mousse.

13. Agencement de capote selon l'une quelconque des revendications précédentes, **caractérisé en ce qu'**une partie centrale (8) transparente ou laquée en couleur ou structurée est posée sur le cadre (13).

14. Agencement de capote selon l'une quelconque des revendications précédentes, **caractérisé en ce qu'**un dispositif de collecte de l'eau (41) est disposé au moins localement sur une face intérieure de la partie de formage (20) ou du cadre (13) tournée vers un espace intérieur du véhicule (FG).

15. Agencement de capote selon l'une quelconque des revendications précédentes, **caractérisé en ce qu'**un joint d'étanchéité (17) est disposé entre les deux parties de formage (20).
